# FASCICULE DE BREVET EUROPEEN

(11) **EP 2 713 315 B1**
(45) Date de publication et mention de la délivrance du brevet: **24.06.2015**
(21) Numéro de dépôt: 12306169.9
(22) Date de dépôt: 26.09.2012
(51) Int. Cl.: G06K 17/00, G06K 9/20

(54) **Procédé et dispositif de lecture d'un document**
Verfahren und Vorrichtung zum Lesen eines Dokuments
Method and device for reading a document

(43) Date de publication de la demande: 02.04.2014
(73) Titulaire: Lotsys, 92150 Suresnes (FR)
(72) Inventeur: Obrenovitch, Yovan, 75017 PARIS (FR); Bourserie, Mickael, 75017 PARIS (FR); Dessout, Dimitri, 78180 MONTIGNY-LE-BRETONNEUX (FR)
(74) Mandataire: Domenego, Bertrand

(56) Documents cités:
- WO-A1-2007/024216
- US-A- 5 140 139

## Description

La présente invention concerne un procédé de lecture d'un document portant des cases imprimées destinées à être remplies par un utilisateur. De tels documents sont par exemple des bulletins de jeu, notamment des bulletins de loterie comprenant des grilles de cases à cocher.

Il est possible de lire un document en acquérant une image numérique de ce document à l'aide d'un appareil de prise d'image, puis en lisant l'image acquise par traitement numérique de manière à déterminer les inscriptions portées par un utilisateur dans une ou plusieurs cases.

Un problème associé à ce type de procédé de lecture réside dans le fait qu'un document peut présenter des déformations physiques (froissures, pliures, courbures), résultant de la manipulation du document par l'utilisateur. De telles déformations rendent difficile la lecture fiable du document.

Il est possible de munir un lecteur d'un dispositif d'aplanissement configuré pour aplanir physiquement le document lors de l'acquisition de l'image. Néanmoins, un tel dispositif d'aplanissement augmente le coût du lecteur, il doit être entretenu pour éviter des dysfonctionnements, et la lecture reste difficile si l'aplanissement n'est pas correct.

Il est possible traiter numériquement l'image acquise de manière à corriger les déformations physiques du document reproduites sur l'image acquise.

WO 2010/062884 divulgue un procédé de lecture d'un document, le document portant des marques d'alignement, dans lequel on compare la position acquise des marques d'alignement sur l'image acquise à la position théorique des marques d'alignement sur un modèle du document, et on détermine une fonction de transfert que l'on applique à l'image acquise du document pour aplanir numériquement le document. En d'autres termes, on détermine une image corrigée correspondant à l'image acquise déformée géométriquement par traitement numérique pour la faire correspondre au modèle du document, puis le document est ensuite lu par comparaison avec le modèle du document. Les traitements numériques pour aplanir une image d'un document sont appelés algorithmes de « défroissage ».

Toutefois, ce procédé de lecture ne donne pas entièrement satisfaction. Le traitement numérique est complexe et possède une efficacité variable selon les déformations physiques subies par le document. Il en résulte que la lecture ne présente pas un degré de fiabilité suffisant.

US 5 140 139 A divulgue un procédé de lecture d'un document comprenant des cases à cocher.

Un des buts de l'invention est de proposer un procédé de lecture de document qui soit fiable et simple à mettre en oeuvre.

A cet effet, l'invention propose un procédé de lecture d'un document selon la revendication 1. Des caractéristiques optionnelles figurent aux revendications 2 à 12.

L'invention concerne également un dispositif de lecture selon la revendication 13, et un système selon la revendication 14.

L'invention et ses avantages seront mieux compris à la lecture de la description qui va suivre, donnée uniquement à titre d'exemple, et faite en référence aux dessins annexés, sur lesquels :
- la Figure 1 est une représentation schématique d'un document correspondant à un modèle de document ;
- la Figure 2 est une image acquise d'un document correspondant au modèle de document et portant des inscriptions et déformé ;
- la Figure 3 est une représentation schématique d'un dispositif de lecture pour lire le document ;
- la Figure 4 est un ordinogramme représentant les étapes d'un procédé de lecture du document mise en oeuvre à l'aide du dispositif de lecture ;
- les Figures 5 et 6 représentent schématiquement des cases et des masques de case pour détecter les cases individuellement par appariement de masque ; et
- la Figure 7 représente schématiquement un alignement de cases détectées lors de la lecture du document.

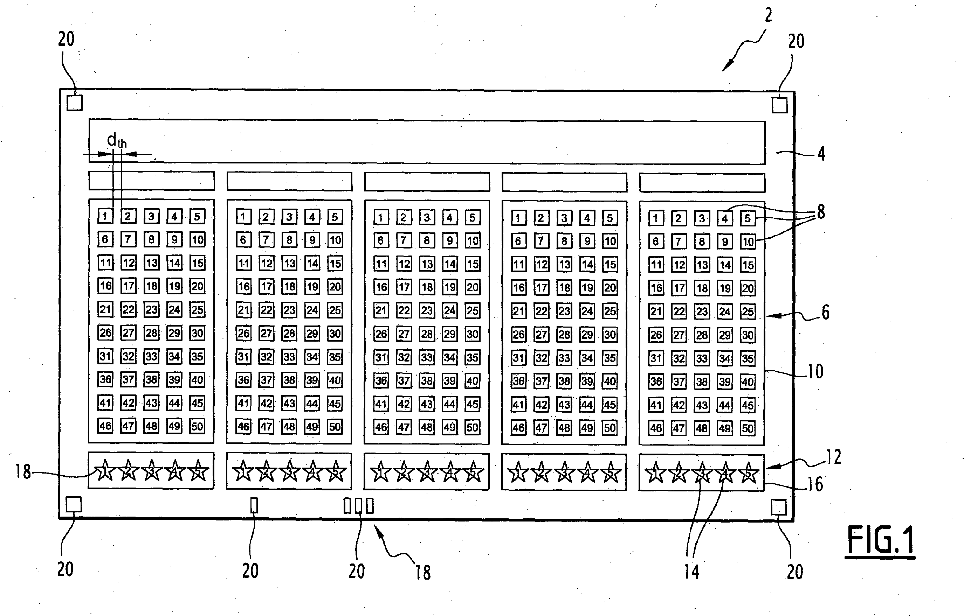

Le document 2 illustré sur la Figure 1 correspond à un modèle de document. Les cases sont disposées sur le document 2 selon une disposition géométrique ou plan géométrique déterminé. Le document 2 est représenté sur la Figure 1 vierge, non déformé physiquement et en vue de face, de telle sorte que le plan géométrique du document 2 correspond à la représentation de la Figure 1.

Le document 2 imprimé comprend un substrat 4, par exemple une feuille, sur lequel sont imprimés des motifs. Le document 2 comprend des cases imprimées sur le substrat 4 et destinées à être remplies par un utilisateur.

Le document 2 est par exemple un bulletin de jeu, notamment un bulletin de loterie.

Le document 2 comprend des zones délimitées, une ou plusieurs case(s) étant présente dans chaque zone. Chaque zone est délimitée par un cadre respectif.

Le document 2 comprend des premières zones 6 comprenant chacune une pluralité de premières cases 8 disposées selon une matrice en lignes horizontales et en colonnes verticales dans l'exemple représenté. En effet, la disposition des cases est en soi libre de contrainte. Chaque matrice de cases 8 comprend dix lignes de cinq cases, les cases étant numérotées de 1 à 50. Dans l'exemple représenté, l'espacement entre les lignes est régulier et l'espacement entre les colonnes est régulier. Chaque première zone 6 est délimitée par un premier cadre 10 respectif.

Le document 2 possède des deuxièmes zones 12 comprenant chacune des deuxièmes cases 14 alignées suivant une ligne horizontale. Chaque deuxième zone 12 est délimitée par un deuxième cadre 16 respectif. Chaque zone 12 comprend cinq deuxièmes cases 14 numérotées de 1 à 5.

De manière générale, une case est un motif possédant un contour quelconque, ouvert ou fermé, délimitant un espace destiné à être rempli par un utilisateur. Une case présente par exemple un contour polygonal régulier, un contour polygonal irrégulier, un contour elliptique ou un contour circulaire.

De manière générale, chaque zone comprend une case ou plusieurs cases de contours identiques ou plusieurs cases de contours variés, au moins deux cases ayant des contours différents.

Dans l'exemple illustré les premières cases 8 possèdent un contour fermé carré, et les deuxièmes cases 14 possèdent un contour fermé en étoile.

De manière générale, un cadre possède un contour quelconque, ouvert ou fermé, délimitant un espace dans lequel se trouve une case ou dans lequel sont regroupées plusieurs cases formant un ensemble de cases. Un cadre présente par exemple un contour polygonal régulier, un contour polygonal irrégulier, un contour elliptique ou un contour circulaire. Chaque cadre entourant une zone est défini par une ligne continue, par une ligne discontinue ou par un aplat, c'est-à-dire une région de couleur unie définissant la zone et entourée par une région d'une autre couleur, le cadre étant défini par l'interface entre la région définissant la zone et la région périphérique.

Dans l'exemple illustré, les premiers cadres 10 et les deuxièmes cadres 16 sont rectangulaires et définis par des lignes.

Le plan géométrique du document définit la position théorique des cadres et des cases du document 2 lorsque le document est vierge et non déformé physiquement, comme sur la Figure 1.

Le plan géométrique contient la position d'autres éléments remarquables imprimés sur le document 2, comme cela sera indiqué par la suite.

En particulier, le document 2 possède un code d'identification 18 imprimé sur le document 2. Le code d'identification 18 identifie le type de document auquel appartient le document 2 et permet de lui associer le plan géométrique correspondant. L'identification du bulletin peut être remplacée par d'autres codes tels que la disposition des cadres entre eux ou toute autre signature permettant d'identifier le type de document en cours de traitement.

Dans l'exemple illustré, le code d'identification 18 comprend des marques 20 imprimées sur la marge du document 2. La couleur, la forme et la disposition relative des marques 20 détermine le code d'identification 18. En variante le code d'identification est un code barre ou un code déchiffrable par reconnaissance optique de caractère ou OCR (correspondant à l'acronyme de « Optical Character Recognition » en anglais).

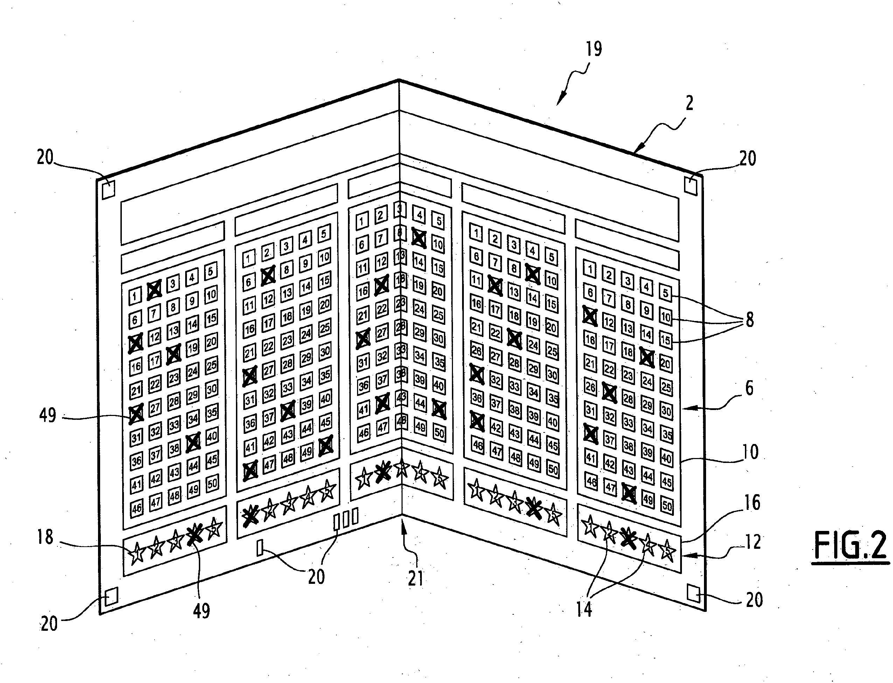

La Figure 2 illustre une image numérique 19 du document 2 rempli par un utilisateur et présentant des déformations géométriques physiques, ici une pliure centrale 21. En pratique, il est possible que le document de jeu 2 présente diverses déformations, notamment une ou plusieurs lignes de pliure, une ou plusieurs froissures et/ou une ou plusieurs courbures.

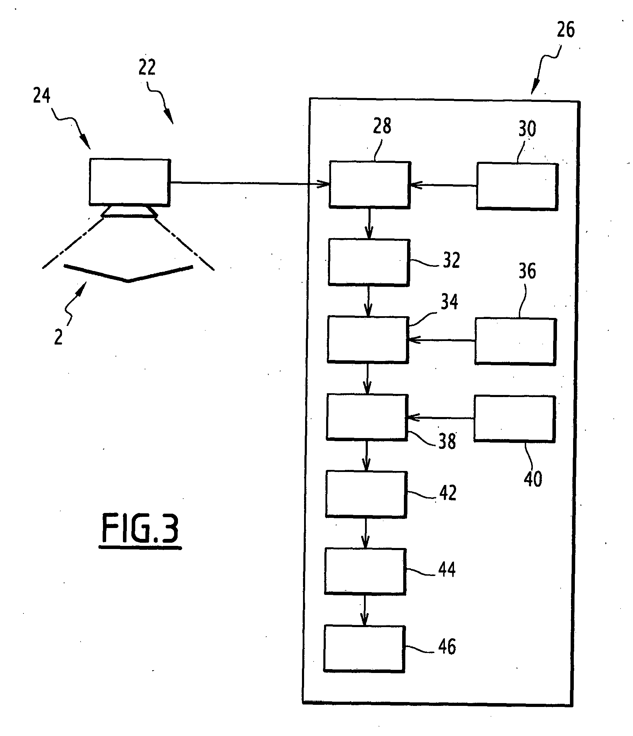

La Figure 3 illustre un dispositif de lecture 22 configuré pour lire le document 2 en mettant en oeuvre un procédé de lecture par traitement numérique d'une image numérique du document 2.

Le dispositif de lecture 22 comprend un appareil de prise d'image 24 pour acquérir une image numérique du document 2 présenté devant l'appareil de prise d'image 24 et un dispositif de traitement numérique 26 pour lire l'image acquise par traitement numérique de celle-ci.

L'appareil de prise d'image 24 est par exemple un appareil photo numérique ou un scanner. Il est configuré pour acquérir une image numérique du document 2 présenté devant lui. L'appareil de prise d'image 24 permet l'acquisition d'une image numérique du document 2 placé librement devant l'appareil de prise d'image.

L'image acquise se présente sous la forme d'une matrice de m x n pixels. L'image acquise reproduit les éventuelles déformations géométriques physiques du document 2 à l'instant de l'acquisition de l'image.

Le dispositif de traitement numérique 26 comprend un module d'identification 28 configuré pour identifier le document 2 et associé à l'image acquise un plan géométrique correspondant stocké dans une base de plan géométriques 30. Le module d'identification 28 est par exemple configuré pour lire le code d'identification 18 par traitement numérique de l'image acquise.

Le dispositif de traitement numérique 26 comprend un module de filtrage 32 pour filtrer numériquement l'image acquise sans la déformer géométriquement.

Le dispositif de traitement numérique 26 comprend un module de détection de zone 34 configuré pour détecter les zones 6, 12 sur l'image acquise, par exemple à partir de masques de zone stockés dans une base de masques de zone 36.

Le dispositif de traitement numérique 26 comprend un module de détection de case 38 configuré pour détecter sur l'image acquise les cases par appariement de masques à partir de masques de case stockés dans une base de masques 40 dans laquelle sont stockés différents masques de case.

Le dispositif de traitement numérique 26 comprend un module de contrôle 42 configuré pour contrôler géométriquement les cases détectées pour évaluer la fiabilité de la détection de cases.

Le dispositif de traitement numérique 26 comprend un module d'analyse 44 configuré pour extrapoler la présence de cases non détectées à l'étape de détection, à partir des cases détectées et du plan géométrique.

Le dispositif de traitement numérique 26 comprend un module de lecture de remplissage 46 configuré pour déterminer pour chaque case détectée ou extrapolée, si cette case est remplie ou non.

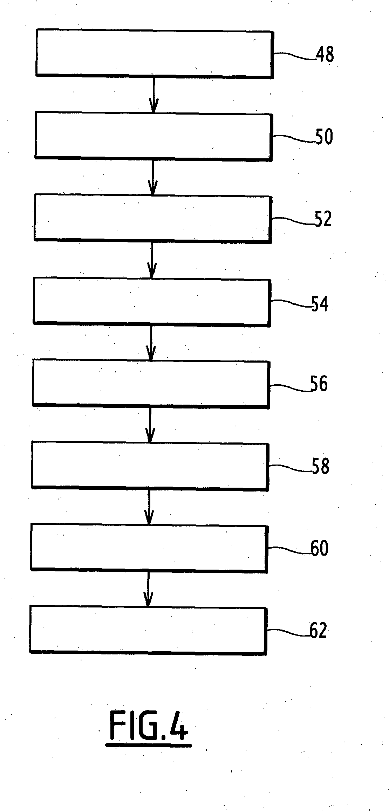

Le procédé de lecture est décrit par la suite en référence à la Figure 3 et à la Figure 4 illustrant les étapes du procédé.

Initialement l'utilisateur coche des cases, par exemple en écrivant sur le document 2. Ensuite, il présente le document 2 rempli, et éventuellement déformé géométriquement, au dispositif de lecture optique 22, devant l'appareil de prise d'image 24.

Dans une étape d'acquisition 48, l'appareil de prise d'image 24 acquiert une image du document 2. L'image acquise reproduit les déformations géométriques physiques du document 2 à l'instant de la prise d'image.

La Figure 2 correspond à l'image acquise. L'image acquise reproduit les inscriptions portées par l'utilisateur, ici des croix 49 manuscrites barrant certaines cases.

Dans une étape d'identification 50, le module d'identification 28 analyse l'image acquise pour déterminer le code d'identification et associer à l'image acquise le plan géométrique correspondant au code d'identification. Le module d'identification 28 détecte les marques 20 sur l'image acquise et leur position relative pour déterminer le type de document auquel appartient le document 2. Il associe à l'image acquise un plan géométrique de la base de plan géométrique 30.

Dans une étape de filtrage 52, le module de filtrage 32 filtre l'image acquise sans la déformer géométriquement. L'image acquise filtrée reproduit les déformations géométriques physiques du document 2 à l'instant de l'acquisition de l'image acquise. Le filtrage consiste par exemple en un rehaussement de contraste pour faciliter ensuite la détection des cases.

Dans une étape de détection de zone 54, le module de détection de zone 34 détecte les zones et plus particulièrement les cadres 10, 16. La détection des cadres 10, 16 est effectuée par exemple par appariement de masque à partir de masques de cadre. Chaque masque de cadre représente au moins une fraction de cadre, de préférence seulement une fraction de cadre.

L'appariement de masque (« template matching » en anglais) consiste à comparer des masques à des fractions de l'image acquise, pour déterminer l'existence et la position des motifs attendus sur l'image acquise. Chaque masque représente un motif attendu. Chaque masque est formé d'une matrice de pixels de dimensions inférieures à celle de l'image acquise. Chaque masque est comparé à différentes régions de l'image acquise de même dimension que le masque pour déterminer si au moins une région correspond au masque. La comparaison est effectuée de manière connue, par exemple en calculant un coefficient de corrélation. Si le coefficient de corrélation dépasse un seuil déterminé, cela signifie que la région considérée correspond au motif attendu.

La détection des cadres 10, 16 permet de localiser les différentes zones 6, 12 et de circonscrire ensuite la détection des cases à l'intérieur de chaque zone 6, 12. La détection des cases est ainsi plus rapide et plus fiable.

Dans un mode de mise en oeuvre, de préférence, si le module de détection de zone 34 est incapable de détecter au moins une zone, la lecture est interrompue. En effet, cela signifie que le document présente des déformations physiques trop prononcées, incompatibles avec une lecture fiable.

Dans une étape de détection de cases 56, le module de détection de case 38 détecte sur l'image acquise les cases 8, 14 du document 2 par appariement de masques à partir de masques de case, chaque masque de case représentant au moins une fraction d'une case.

La détection des cases par appariement de masque de case est mise en oeuvre sur l'image acquise reproduisant les éventuelles déformations géométriques physiques du document sans déformation géométrique numérique préalable de l'image acquise visant à corriger les déformations géométrique physiques du document.

Le module de détection de case 38 détecte les cases individuellement, case par case, par appariement de masque avec des masques de case, chaque masque de case représentant au moins une fraction de case. Chaque masque de case est un masque de case partiel représentant seulement une fraction de case ou un masque de case complet représentant une case complète. Les masques de case sont stockés dans la base de masque 40.

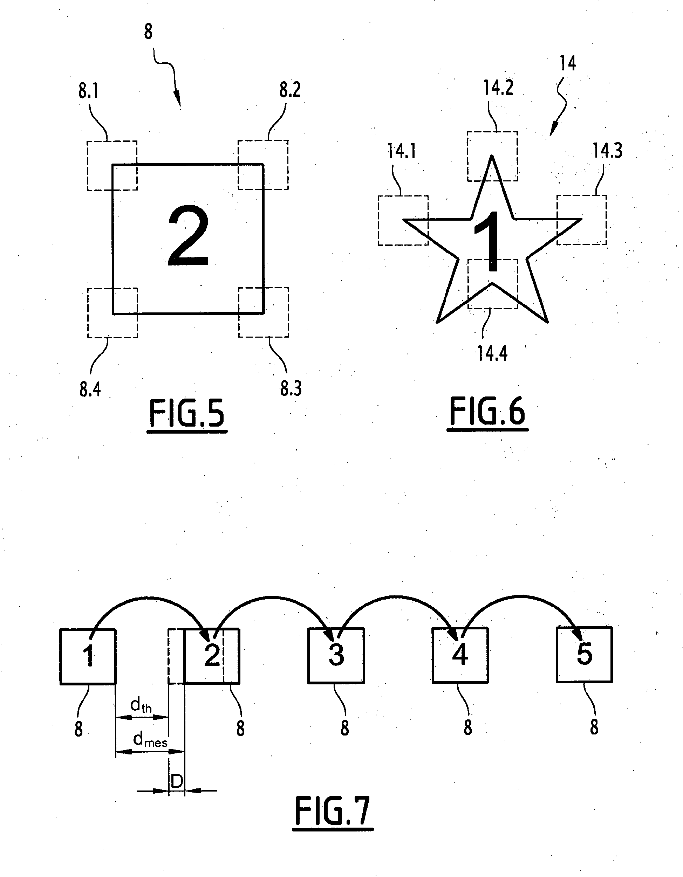

Des masques de case partiels appropriés pour la lecture du document 2 des Figures 1 et 2 sont représentés sur les Figures 5 et 6. Sur la Figure 5, des premiers masques de cases 8.1, 8.2, 8.3 et 8.4 délimités par des pointillés, correspondent aux quatre coins d'une première case 8 de contour carré. Sur la Figure 6, des deuxièmes masques 14.1, 14.2, 14.3, 14.4 délimités par des pointillés correspondent à des extrémités de branches et à des creux entre deux branches adjacentes d'une deuxième case 14 de contour en étoile.

Les premiers masques et les deuxièmes masques sont donnés uniquement à titre d'exemple. En pratique, la base de masques 40 contient l'ensemble des masques de cases permettant d'identifier les cases de différentes formes (carré, rectangulaire, circulaire,...) des types de document que le dispositif de lecture est susceptible de lire.

Le module de détection de case 38 détecte les régions de l'image acquise qui correspondent à un masque de case. Ensuite, le module de détection de case 38 détermine la position des différentes cases en associant entre elles les régions détectées sur l'image acquise et correspondant à des fractions complémentaires d'une case. Des régions détectées sont par exemple associées lorsqu'elles correspondent aux quatre coins d'une case, dans une position géométrique relative adéquate (distance, répartition autour du centre de la case...).

Le module de détection de case 38 identifie ainsi les contours présents sur l'image numérisée comme des cases.

Dans une étape de contrôle 58, le module de contrôle 42 contrôle la géométrie de l'image acquise. Cette étape de contrôle vise à valider que les déformations géométriques physiques du document sont dans des plages acceptables pour garantir la fiabilité du résultat de la lecture.

Le module de contrôle 42 effectue des contrôles géométriques entre des éléments remarquables du document. Les éléments remarquables sont par exemple les cases détectées, les cadres détectés ainsi que toute autre marque imprimée sur le document et détectée. Les éléments remarquables forment un maillage sur l'ensemble du document. Les éléments remarquables figurent sur le plan géométrique

Le contrôle géométrique est effectué de proche en proche. La géométrie de chaque élément remarquable et/ou sa position est contrôlée par rapport à un autre élément remarquable de référence. Si la vérification est positive, l'élément remarquable devient le nouvel élément remarquable de référence, et le module de contrôle 42 contrôle un autre élément remarquable par rapport aux éléments remarquables de référence préalablement validés, jusqu'à valider l'ensemble des éléments remarquables défini pour le plan géométrique du document.

Le contrôle géométrique est effectué par exemple sur la base d'abaques de déformation, indiquant les plages de déformation acceptées et les plages de déformation refusée. Si les déformations sont acceptables, la lecture du document est confirmée. Si les plages de déformation sont refusées, la lecture du document est interrompue et un message correspondant est transmis à l'utilisateur.

Les abaques de déformation sont déterminés par exemple expérimentalement. Des tests de lecture sont effectués pour des déformations plus ou moins prononcées, la fiabilité de la lecture étant contrôlée par un opérateur. Ceci permet de déterminer les déformations à partir desquelles la lecture n'est plus fiable. Les abaques sont choisis en fonction de ce résultat, avec une marge de sécurité pour assurer une fiabilité d'un résultat de lecture, et l'interruption de la lecture si cette fiabilité n'est pas garantie.

La Figure 7 illustre un exemple de contrôle géométrique appliqué à une ligne de cases détectées. L'alignement de cases est par exemple une ligne d'une matrice de cases ou une ligne de cases. Le module de contrôle 42 compare le rapport R de la différence D entre la distance mesurée dₘₑₛ entre deux cases adjacentes détectées d'un alignement de cases et une distance théorique dₜₕ, rapporté à la distance théorique dₜₕ à une valeur seuil S. La distance mesurée dₘₑₛ est mesurée sur l'image acquise. La distance théorique dₜₕ est fournie par le modèle de document. Si le rapport R est supérieur au seuil déterminé, cela signifie que la précision de détection entre les deux cases de l'alignement est trop faible pour assurer une fiabilité de détection suffisante des autres cases de l'alignement, car les imprécisions s'additionnent le long de l'alignement de cases. Si un rapport R est trop élevé, le procédé de lecture est interrompu et le document 2 est rejeté.

Le contrôle géométrique est effectué avec d'autres éléments remarquables. Les marques d'identification 18 peuvent être utilisées comme élément remarquable. Des marques de contrôle prévues spécifiquement à cet effet, peuvent également être utilisées.

Différentes règles sont envisageables en fonction du type de document. De manière générale, le module de contrôle 42 applique un ensemble de règles de contrôle qui dépendent du plan géométrique du document.

Le remplissage des cases du document 2 par l'utilisateur perturbe la détection des cases. Il est possible qu'une case remplie ne soit pas détectée par le module de détection de case 38.

Dans une étape de reconstruction 60, le module de reconstruction 44 détermine la position de cases manquantes à l'issue de la détection des cases, en utilisant le plan géométrique du document.

En effet, dans certaines configurations, il est possible de déterminer avec une certitude suffisante la position d'une case qui n'a pas été détectée lors de la détection des cases, par comparaison avec le modèle de document.

Par exemple, lorsque le plan géométrique indique la présence d'un ensemble de matrice de 3x3 cases mais que seules les huit cases périphériques ont été détectées, il est quasi certain qu'une case centrale remplie est présente au centre des huit cases. Dans une telle configuration, le module de reconstruction 44 extrapole la présence d'une case remplie.

Par exemple, si une ligne entière de cases manque dans une matrice de cases, il est à priori impossible de déterminer avec une certitude suffisante quelle ligne manque (la première, la deuxième, la troisième...). Il est en effet possible qu'une ligne intermédiaire de cases ne soit pas détectable du fait d'une pliure du document 2 le long de cette ligne intermédiaire. Dans une telle configuration, la fiabilité de lecture est affectée et le module de reconstruction 44 interrompt la lecture. Ceci est fourni à titre d'exemple. Dans un tel cas, il serait éventuellement possible de combiner différentes règles permettant par exemple de localiser une ligne de case cochées, en fonction par exemple de la distance entre les lignes de cases détectées, du nombre de cases à cocher par rapport au nombre de cases dans la ligne...

De manière générale, le module de reconstruction 44 applique un ensemble de règles de reconstruction, chaque règle permettant de valider la position d'une case manquante à l'issue de la détection, en fonction des cases détectées et du plan géométrique du document 2.

Dans une étape de lecture de remplissage 62, le module de lecture de remplissage 46 détermine pour chaque case détectée ou extrapolée, si cette case est remplie. Le module de lecture remplissage 46 mesure de manière connue en soi la densité de remplissage de chaque case sur l'image acquise et compare la valeur mesurée à une densité de remplissage seuil. Si la valeur calculée est supérieure à la densité de remplissage seuil, alors le module de lecture de remplissage détermine que la case est remplie. Dans le cas contraire, il détermine que la case n'est pas remplie.

Grâce à l'invention, il est possible de lire un document correspondant à un modèle de document de manière fiable. La lecture effectuée par appariement de masque appliqué aux cases destinées à être remplies par un utilisateur est simple à mettre en oeuvre. Il permet une lecture fiable, en détectant individuellement les cases, ce qui permet d'assurer la présence de chaque case détectée avec une fiabilité élevée. D'éventuelles cases manquantes à l'issue de la détection sont extrapolées en fonction d'un plan géométrique du document. La lecture est effectuée sur l'image acquise représentant le document et reproduisant les éventuelles déformations physiques du document, sans corriger l'image acquise en la déformant géométriquement par traitement numérique pour la faire correspondre au modèle. Le procédé évite donc la mise en oeuvre d'un traitement numérique de correction géométrique de l'image acquise ou « algorithme de défroissage ».

L'invention n'est pas limitée au mode de mise en oeuvre divulgué.

Ainsi, si le code d'identification est un code barre, il est possible de configurer le module d'identification pour lire le code barre sur l'image acquise ou de prévoir un lecteur de code barre séparé de l'appareil de prise d'image pour lire le code barre. Le document de jeu peut être identifié par d'autres codes tels que par exemple la disposition des cadres entre eux.

Par ailleurs, le filtrage de l'image avant la détection des cases est optionnel. La détection des cadres est également optionnelle. Elle n'est pas utile si le document ne possède pas de zone encadrée. Il est également possible d'effectuer directement la détection des cases.

L'invention s'applique notamment à la lecture de bulletin de jeu, notamment de bulletin de loterie, pour lire le bulletin de jeu présenté au dispositif de lecture intégré à un terminal de jeu, et fournir le résultat du jeu associé.

Ainsi, l'invention concerne un système, en particulier un système de jeu comprenant un dispositif de lecture configuré pour lire des documents correspondant à au moins un modèle de document, en particulier un modèle de bulletin de jeu, et des documents correspondant chacun à un modèle de document lisible par le dispositif de lecture.

## Revendications

1. Procédé de lecture d'un document (2), le document (2) correspondant à un modèle de document et comprenant des cases (8, 14) imprimées à remplir par un utilisateur, le procédé comprenant l'acquisition d'une image numérique du document (2) et le traitement numérique de l'image acquise, le traitement numérique comprenant la détection des cases (8, 14) sur l'image acquise par appariement de masque, chaque case étant détectée individuellement par appariement avec au moins un masque de case, le ou chaque masque de case représentant au moins une fraction de case, **caractérisé en ce que** le procédé de lecture comprend la reconstruction de cases, au moins une case manquant à l'issue de la détection des cases étant extrapolée à partir des cases détectées et du modèle du document.

2. Procédé selon la revendication 1, dans lequel l'appariement de masque est mis en oeuvre à partir de masques de case représentant chacun une fraction de case.

3. Procédé selon la revendication 1 ou 2, dans lequel la détection est effectuée sur l'image acquise (19) reproduisant les déformations physiques du document à l'instant de l'acquisition, sans correction géométrique numérique des déformations physiques du document.

4. Procédé selon l'une quelconque des revendications précédentes, comprenant le contrôle des déformations physiques du document par détection d'éléments remarquables de l'image acquise et vérification de leur disposition géométrique relative.

5. Procédé selon la revendication 4, dans lequel le contrôle des déformations physiques du document comprend la comparaison de déformations physiques mesurées sur l'image acquise avec des abaques de déformation.

6. Procédé selon la revendication 4 ou 5, dans lequel le contrôle des déformations physiques du document comprend la vérification de la disposition géométrique relative des cases détectées.

7. Procédé selon la revendication 6, dans lequel le contrôle des déformations physiques du document comprend la comparaison de la distance mesurée (dₘₑₛ) sur l'image acquise entre deux cases (4) à la distance théorique (dₜₕ) entre ces cases.

8. Procédé selon la revendication 7, dans lequel la distance mesurée est la distance entre deux cases consécutives d'un alignement de cases.

9. Procédé selon l'une quelconque des revendications précédentes, dans lequel le document (2) porte un code d'identification (8) imprimé, le procédé comprenant la lecture du code d'identification (8) et l'association du modèle de document à l'image acquise.

10. Procédé selon l'une quelconque des revendications précédentes, dans lequel le document (2) comprend au moins un cadre (10, 16), chaque cadre entourant au moins une case, le traitement numérique comprenant, préalablement à la détection des cases (4), la détection du ou de chaque cadre (10, 16), la détection de case étant ensuite mise en oeuvre dans chaque cadre (10, 16).

11. Procédé selon l'une quelconque des revendications précédentes, comprenant la détection du remplissage des cases.

12. Procédé selon l'une quelconque des revendications précédentes, comprenant, préalablement à la détection de case, une étape d'augmentation du contraste de l'image acquise.

13. Dispositif de lecture optique (22) pour la lecture d'un document (2) correspondant à un modèle de document et comprenant au moins un ensemble de cases (4) imprimées à remplir par un utilisateur, le lecteur optique comprenant un appareil (24) de prise d'image numérique pour acquérir une image numérique du document (2) et un dispositif de traitement numérique (26) pour appliquer un traitement numérique à l'image acquise, le dispositif de traitement numérique comprenant un module de détection de case pour détecter les cases sur l'image acquise par appariement de masque, chaque case étant détectée individuellement par appariement avec au moins masque de case, le ou chaque masque de case représentant au moins une fraction de case, **caractérisé en ce qu'**il est configuré pour la mise un oeuvre d'un procédé selon l'une quelconque des revendications précédentes.

14. Système comprenant un dispositif de lecture selon la revendication 13 configuré pour lire des documents correspondant à des modèles de document, et des documents correspondant au ou à chaque modèle de document lisible par le dispositif de lecture.

## Patentansprüche

1. Verfahren zum Lesen eines Dokuments (2),wobei das Dokument (2) einem Dokumentenmodell entspricht und gedruckte, von einem Benutzer auszufüllende Felder (8, 14) umfasst, wobei das Verfahren die Erfassung eines digitalen Bilds des Dokuments (2) und die digitale Verarbeitung des erfassten Bilds umfasst, wobei die digitale Verarbeitung die Detektion der Felder (8, 14) auf dem erfassten Bild durch Maskenpaarfindung umfasst, wobei jedes Feld durch Paarfindung mit mindestens einer Feldmaske individuell detektiert wird, wobei die oder jede Feldmaske mindestens eine Feldfraktion darstellt, **dadurch gekennzeichnet, dass** das Leseverfahren die Feldrekonstruktion umfasst, wobei mindestens ein nach Abschluss der Detektion der Felder fehlendes Feld ausgehend von den detektierten Feldern und dem Modell des Dokuments extrapoliert wird.

2. Verfahren nach Anspruch 1, wobei das Maskenpaarfindung ausgehend von Feldmasken durchgeführt wird, die jeweils eine Feldfraktion darstellen.

3. Verfahren nach Anspruch 1 oder 2, wobei die Detektion auf dem erfassten Bild (19), das physische Verformungen des Dokuments im Augenblick der Erfassung reproduziert, ohne digitale geometrische Korrektur der physischen Verformungen des Dokuments durchgeführt wird.

4. Verfahren nach einem der vorangehenden Ansprüche, das die Kontrolle der physischen Verformungen des Dokuments durch Detektion bemerkenswerter Elemente des erfassten Bilds und Überprüfung ihrer relativen geometrischen Anordnung umfasst.

5. Verfahren nach Anspruch 4, wobei die Kontrolle der physischen Verformungen des Dokuments den Vergleich auf dem erfassten Bild gemessener physischer Verformungen mit Verformungsnomogrammen umfasst.

6. Verfahren nach Anspruch 4 oder 5, wobei die Kontrolle der physischen Verformungen des Dokuments die Überprüfung der relativen geometrischen Anordnung der detektierten Felder umfasst.

7. Verfahren nach Anspruch 6, wobei die Kontrolle der physischen Verformungen des Dokuments den Vergleich des auf dem erfassten Bild zwischen zwei Feldern (4) gemessenen Abstands (dₘₑₛ) mit dem theoretischen Abstand (dₜₕ) zwischen diesen Feldern umfasst.

8. Verfahren nach Anspruch 7, wobei der gemessene Abstand der Abstand zwischen zwei aufeinanderfolgenden Feldern einer Felderanordnung ist.

9. Verfahren nach einem der vorangehenden Ansprüche, wobei das Dokument (2) einen gedruckten Identifikationscode (8) trägt, wobei das Verfahren das Lesen des Identifikationscodes (8) und die Zuordnung des Dokumentenmodells zum erfassten Bild umfasst.

10. Verfahren nach einem der vorangehenden Ansprüche, wobei das Dokument (2) mindestens einen Rahmen (10, 16) umfasst, wobei jeder Rahmen mindestens ein Feld umgibt, wobei die digitale Verarbeitung vor der Detektion der Felder (4) die Detektion des oder jedes Rahmens (10, 16) umfasst, wobei anschließend die Felddetektion in jedem Rahmen (10, 16) durchgeführt wird.

11. Verfahren nach einem der vorangehenden Ansprüche, das die Detektion des ausgefüllten Inhalts der Felder umfasst.

12. Verfahren nach einem der vorangehenden Ansprüche, das vor der Felddetektion einen Schritt der Verstärkung des Kontrasts des erfassten Bilds umfasst.

13. Optische Lesevorrichtung (22) zum Lesen eines Dokuments (2), das einem Dokumentenmodell entspricht und mindestens eine Gruppe gedruckter Felder (4) umfasst, die von einem Benutzer auszufüllen sind, wobei das optische Lesegerät ein digitales Bildaufnahmegerät (24), um ein digitales Bild des Dokuments (2) zu erfassen, und eine digitale Verarbeitungsvorrichtung (26), um eine digitale Verarbeitung auf das erfasste Bild anzuwenden, umfasst, wobei die digitale Verarbeitungsvorrichtung ein Felddetektionsmodul umfasst, um die Felder auf dem erfassten Bild durch Maskenpaarfindung zu detektieren, wobei jedes Feld individuell durch Paarfindung mit mindestens einer Feldmaske detektiert wird, wobei die oder jede Feldmaske mindestens eine Feldfraktion darstellt, **dadurch gekennzeichnet, dass** sie für die Durchführung eines Verfahrens nach einem der vorangehenden Ansprüche konfiguriert ist.

14. System, das eine Lesevorrichtung nach Anspruch 13 umfasst, die konfiguriert ist um Dokumente zu lesen, die Dokumentenmodellen entsprechen, und Dokumente, die dem ober jedem Dokumentenmodell entsprechen, das von der Lesevorrichtung lesbar ist.

## Claims

1. A method for reading a document (2), the document (2) corresponding to a document template and comprising printed boxes (8, 14) to be filled out by a user, the method comprising acquiring a digital image of the document (2) and digitally processing the acquired image, the digital processing comprising the detection of the boxes (8, 14) on the acquired image by mask matching, each box being detected individually by matching with at least one box mask, the or each box mask representing at least one box fraction, **characterized in that** the reading method comprises box reconstruction, at least one box missing at the end of the box detection being extrapolated from the detected boxes and the template of the document.

2. The method according to claim 1, wherein the mask matching is implemented from box masks each representing a box fraction.

3. The method according to claim 1 or 2, wherein the detection is done on the acquired image (19) reproducing the physical deformations of the document at the time of the acquisition, without digital geometric correction of the physical deformations of the document.

4. The method according to any one of the preceding claims, comprising checking physical deformations of the document by detecting remarkable elements of the acquired image and verifying their relative geometric arrangement.

5. The method according to claim 4, wherein the checking for physical deformations of the document comprises comparing physical deformations measured on the acquired image with deformation nomograms.

6. The method according to claim 4 or 5, wherein the checking for physical deformations of the document comprises verifying the relative geometric arrangement of the detected boxes.

7. The method according to claim 6, wherein the checking of the physical deformations of the document comprises comparing the measured distance (dₘₑₛ) over the acquired image between two boxes (4) to the theoretical distance (dₜₕ) between those boxes.

8. The method according to claim 7, wherein the measured distance is the distance between two consecutive boxes of an alignment of boxes.

9. The method according to any one of the preceding claims, wherein the document (2) bears a printed identification code (8), the method comprising reading the identification code (8) and associating the document template with the acquired image.

10. The method according to any one of the preceding claims, wherein the document (2) comprises at least one frame (10, 16), each frame surrounding at least one box, the digital processing comprising, prior to the detection of the boxes (4), the detection of the or each frame (10, 16), then, the box detection being implemented in each frame (10, 16).

11. The method according to any one of the preceding claims, comprising the detection of the filling of the boxes.

12. The method according to any one of the preceding claims, comprising, before the box detection, a step for increasing the contrast of the acquired image.

13. An optical reading device (22) for reading a document (2) corresponding to a document template and comprising at least one set of printed boxes (4) to be filled out by a user, the optical reader comprising a digital image acquisition apparatus (24) for acquiring a digital image of the document (2) and a digital processing device (26) for applying digital processing to the acquired image, the digital processing device comprising a box detection module to detect the boxes on the acquired image by mask matching, each box being detected individually by matching with at least one box mask, the or each box mask representing at least one box fraction, **characterized in that** it is configured to implement a method according to any one of the preceding claims.

14. A system comprising a reading device according to claim 13, configured to read documents corresponding to document templates, and documents corresponding to the or each document template readable by the reading device.
